# EUROPEAN PATENT SPECIFICATION

(11) **EP 4 532 815 B1**
(45) Date of publication and mention of the grant of the patent: **11.11.2026**
(21) Application number: 23735377.6
(22) Date of filing: 30.05.2023
(51) Int. Cl.: D06C 15/02, D21G 1/02, D21G 1/00

(54) **CALENDERING MACHINE**
KALANDERMASCHINE
MACHINE DE CALANDRAGE

(30) Priority: 30.05.2022 IT 202200011375
(43) Date of publication of application: 09.04.2025
(73) Proprietor: Ramina S.R.L., 35010 Grantorto (PD) (IT)
(72) Inventor: RAMINA, Graziano, 35010 Grantorto (PD) (IT)
(74) Representative: Gallo, Luca
(86) International application number: PCT/IB2023/055525
(87) International publication number: WO 2023/233288

(56) References cited:
- EP-A1- 0 290 637
- EP-A1- 3 108 058
- DE-A1- 102018 111 232
- DE-A1- 102019 123 658
- DE-A1- 19 548 865
- DE-B- 1 113 357
- US-A- 3 244 090
- US-A- 555 385
- BRESSER H ET AL: "SNC - DER SUPERKALANDAR DER 90ER JAHRE", IPW INTERNATIONAL PAPER WORLD, DPW VERLAGSGESELLSCHAFT MBH, HEUSENSTAMM, DE, vol. 43, no. 10A, 1 October 1989 (1989-10-01), pages 169 - 182, XP000081773, ISSN: 0031-1340

## Description

### FIELD OF TECNIQUE

The present invention relates to a calendering machine, preferably for nonwoven fabrics, such as plastic materials, according to the preamble of independent claim 1.

More specifically, the calendering machine object of the present invention is advantageously employable in the textile industry, particularly for carrying out finishing and/or dressing operations on woven (and/or nonwoven) fabrics.

Therefore, the invention relates into the field of production of tape material preferably of nonwoven fibers, i.e., more generally, into the field of production and processing of nonwoven fabric.

Preferably, the calendering machine in question is intended to be preferably used in the field of forming and/or processing non-woven fabric slivers, in particular for binding or thermally bonding a plurality of plastic filaments. Such tapes may, for example, be used for manufacturing of sanitary products, such as bonnets, masks, and gloves, or in the field of agriculture for the production of nonwoven fabric intended to be laid on the soil to be cultivated, to obviate the formation of weeds and/or to protect seeds.

### PRIOR ART STATE

It is well known in the relevant field, particularly in the textile industry field, the use machines for calendering at least sliver of fabric or nonwoven fabric. The term "calendering" shall be intended for the purposes of this patent application, a finishing or dressing operation of a previously formed fabric or nonwoven web. Specifically, in the case of a nonwoven fabric, the calendering machine involves running the sliver of nonwoven fabric between two counter-rotating rollers to achieve a surface finishing or heat sealing of the fibers comprising the nonwoven fabric. Calendering machines are also known in industry technical jargon as "calenders".

Said machines normally comprise at least one support structure, such as a metal frame, and at least two cylinders, rotatably mounted on the support structure and rotating around two corresponding axes of rotation parallel to each other.

In more detail, the known type of machine involves the two cylinders being side by side, normally parallel, counter-rotating and such as to defining between them a passage slot, configured to be passed through by the fabric (or nonwoven fabric) sliver.

The contact zone between the two cylinders and the fabric being processed is commonly called "nip" in the technical jargon.

Operationally, the cylinders are dragged in rotation according to two corresponding opposite directions of rotation to superficially intercept the sliver and drag it to pass through the passage slot.

Normally, in the nonwoven fabric production and forming field, cylinders are heated (e.g., by passing at least one heating fluid through them) in order, for example, to carry out heat-sealing and thus bind together the filaments of the sliver that pass through the gap between the cylinders.

Operationally, the heated cylinders exert pressure on the fabric (nonwoven) in order to give certain and/or desired surface and/or structural features to it, e.g., compactness and lustre. Multiple configurations of textile or nonwoven calendering machines have been developed, in particular Document EP 3 198 070 B1 or DE 102018111232 describes a textile or nonwoven calendering machine comprising a support structure, on which a striker roller, a first roller and a second roller are mounted. The striker roller defines, together with the first roller or, alternately, the second roller, forms a passage slot, through which the sliver of material can be guided. The first roller can be moved between a working position in which said first roller, together with the striker roller, forms the aforementioned gap, also called as "nip", and a rest position. Likewise, the second roller may be moved between a working position, in which said second roller, together with the striker roller, forms said gap, and a corresponding rest position.

In more detail, the support structure comprises a first rotating member which mounts the first roller. The revolving member is known in the technical jargon of the filed with the term "rocker arm" or "rocking lever". Conveniently, the first rotating member is rotatably mounted on the support structure and movable around a rotation axis parallel to and spaced apart from the rotation axis of the striker roller. In this way, the rotating member can be controlled towards and away from the striker roller by rotating around its axis of rotation to simultaneously move the first roller between the working configuration and the rest configuration.

Similarly, the support structure comprises a second revolving member, substantially to the first revolving member, with respect to a vertical axis of symmetry. In this way, the second roller is movable between its resting and working configuration by the movement of the corresponding second rotating member.

In the reference technical field, is also known from document EP 1 130 159 B1 and document WO 2019/214913 A1 a calendering machine in which the movement of the rotating member take place by means of extendable hydraulic cylinders configured to push the corresponding rotating organs around their rotational axes and bring the first or second rollers into the working configuration or the rest configuration.

However, the known calendering machines briefly described so far have been proved not free form operational drawbacks.

The main drawback is due to the fact that the movement of the rollers by means of the aforementioned rotating parts causes mechanical stresses such as to promote rapid wear and degradation of the surfaces in relative motion between them, thus requiring frequent maintenance and continuous and constant monitoring of the condition of the machine, which is reflected in a lowering and often unsatisfactory production efficiency.

A further drawback lies is due to the fact that the above-described known type machines are very bulky, particularly rotating members requiring a large amount to be moved between their working and resting configurations. Obviously, this necessity results in the realization of a support structure that is large in size and thus capable to absorbing the resulting mechanical stresses. In this way, the known type machines result not only bulky but also expensive and heavy.

A further drawback of the known cited prior art lies in the fact that machines are expensive due to the numerous mechanical components required to enable the rotary movement of the members.

A further drawback lies in the fact that machines of the known type are mechanically complex and technically difficult to manufacture.

A further drawback lies in the fact that the known type machines provide that the rollers are rotatably mounted in fixed housings formed in the revolving members, this does not allow for variation in the passage slot for the fabric sliver (i.e., the nip), defined between the first and/or second roller and the striker roller. This limitation gives to the known type of machine an unsatisfactory working flexibility.

It is also known, in the reference technical field, particularly from documents IT 102014902232565 A1 and IT 102017000135808 a machine for calendering fabric and/or non-woven fabric equipped with a revolver structure for exchanging the rollers in the respective working configurations, which structure comprising a revolving drum bearing mounted the first and second rollers and placed above the striker roller.

In more detail, the revolving drum comprises a cylindrical structure which extends along one of its central horizontal axes and configured to house - in seats provided near the outer cylindrical surface of the drum - two engraved cylinders parallel to each other and thermoregulated.

Operationally, the rotating drum can be operated by rotating around its central horizontal axis and parallel to the rotation axis of the striker roller to alternately bring the first roller and/or the second roller in their respective working configuration close to the striker roller below. **In** this way, the known type of machine is intended to allow rapid exchange between the rollers mounted on the drum.

However, even this last known type of machine briefly described so far has proved in practice not without drawbacks.

The main drawback lies in the fact that the drum envisaged by such a machine is heavy and has a high inertia and therefore requires a great deal of power to be moved in rotation. **In** this situation, the known type of machine absorbs and consumes a greater amount of energy than other calendering machine configurations.

A further drawback of the known type of machine lies in the fact that, during the exchange of the rollers, the drum tends to oppose its rotation due to its high inertia, causing rapid wear of appropriate drive means used for such movement as well as a consequent loss of accuracy of the positioning of the rollers with respect to the striker roller.

A further drawback lies in the fact that the rotating drum is rotatably mounted on the support structure by the interposition of suitable bearings, particularly friction bearings (e.g., bushings), which are extremely expensive as well as subject to rapid wear and deterioration. Such bearings, once worn, are sources of inaccuracies in the positioning of the drum relative to the support structure.

A further drawback lies in the fact that machines of the known type involve the rotation of rollers, which are themselves connected to an oil pump by means of large, semi-rigid pipes. During the rotation of the rollers between the working and resting configurations, the movement of such oil pipes is actually very complex and impairs the usability of the known-type machine.

Document US 3,244,090 describes a calendering machine provided with a fixed counter roller and two rollers that are movable alternatively, each along a corresponding direction of movement that define an angle of substantially 90° with the direction of movement of the other roller, between a working position near to the counter roller and a rest postion far to the counter roller. In this matter, it is possible to substitute one of the movable rollers when worn, while the other roller is still working. This calendering machine is not versatile.

Document EP 3108058 describes a calendering machine provided with a counter roller and a carrier, which has two rollers and is movable along a horizontal direction to bring one of these rollers in a working position near the counter roller. This calendering machine is not versatile and has a high inertia in the movement of the carrier with the two rollers.

### OBJECTS OF THE INVENTION

The object of the present invention is to propose a machine for calendering, particularly of nonwoven fabric, that allows to overcome and remedy, at least in part, the drawbacks present in the mentioned above known solutions.

Further object of the present invention is to provide a nonwoven calendering machine that is compact and/or not bulky.

Further object of the present invention is to provide a calendering machine that allows or easy and accurate rolls exchanging.

Further object of the present invention is to provide a calendering machine that obviates the need of the prior art a to move rollers between their resting and working configurations by rotary type movement means.

Further object of the present invention is to provide a calendering machine which allows to prevent the woven and/or nonwoven sliver from wrapping around the rollers as a result of its calendering, in particular, that allows to facilitate the release of the product exiting from the gap (i.e., from the nip) at the end of the nonwoven forming process.
20 Further object of the present invention is to provide a calendering machine which allows to modify the position of the passage slot for the sliver. In other words, the object of the present invention is to provide a calendering machine which allows to vary the angle of inclination of the direction with which the sliver enters the passage slot defined between the rollers of the machine, in particularly with respect to a horizontal plane.

Further purpose of the present invention is to provide a calendering machine which allows to avoid damaging of the sliver.

Further object of the present invention is to provide a calendering machine that allows sufficient ventilation of the non-woven fabric sliver.

Further object of the present invention is to provide a calendering machine which is constructively and operationally completely reliable.

Further object of the present invention is to provide a calendering machine which allows rapid exchange of rolls.

Further object of the present invention is to provide a calendering machine which allows to obtain a production efficiency higher than that of conventional type calendering machines. Further object of the present invention is to provide a calendering machine that is easy and inexpensive to manufacture.

Further object of the present invention is to provide a calendering machine which requires minimal maintenance.

Another object of the present invention is to propose a calendering machine which has an alternative and/or improved configuration, both in terms of construction and function, compared to known conventional solutions.

### SUMMARY OF THE INVENTION

All of the objects, either singly or in any combination thereof, and others which will result from the detailed description below are achieved, according to the invention, by a non-woven calendering machine 1 having the features set forth in claim 1.

In particular, the objects are achieved by a non-woven calendering machine comprising a support structure 2, at least one striker roller 3 extending along a first X-axis, rotatably mounted on said support structure 2 and configured to rotate about said first X-axis, a first roller 4 extending along a second Y-axis, substantially parallel to said first X-axis, configured to rotate about said second Y-axis and to be moved between a first working configuration, wherein said first roller 4 is proximal to said striker roller 2 and a first rest configuration wherein said first roller 4 is placed distal to said striker roller 2, a second roller 5 extending along a third Z-axis, substantially parallel to said first X-axis and said second Y-axis configured to rotate about second third X-axis and to be moved between a second working configuration in which said second roller 5 is proximal to said striker roller 2 and a second rest configuration in which second roller 5 is placed distal to said striker roller 2, wherein said first roller 4 in said first working configuration and said second roller 5 in said second working configuration define a passage slot 6 for at least a sliver N of woven and/or non-woven fabric, and wherein with said first roller 4 in said first working configuration, said second roller is in said rest configuration and vice versa, movement means 7 mechanically connected to at least said first roller 4 and said second roller 5 and configured to move said first roller 4 and said second roller 5, wherein said movement means 7 are configured to move said first roller 4 between said first working configuration and said first resting configuration along a first rectilinear movement direction A and to move said second roller 5 between said second working configuration and said second resting configuration along a second rectilinear movement direction B different from said first rectilinear movement direction. Advantageously, said movement means 7 comprising at least a first slide 8 extending parallel to said first movement direction A; at least a first sliding block 9 slidably associated with said first slide 8 and bearing mounted said first roller 4; at least a second slide 10 extending parallel to said second movement direction B; and at least a second sliding block 11 slidably associated with said second slide 10 and bearing mounted said second roller 5. Advantageously, said movement means 7 comprising at least a first actuator 12 mechanically connected to said first sliding block 9 and operable to move said first sliding block 9 linearly along said first direction of movement A; at least one second actuator 13 mechanically connected to said second sliding block 11 and operable to move said second sliding block 11 linearly along said second direction of movement B.

Advantageously, said first roller 4 has a substantially cylindrical shape and is provided with a first radius R1 extending between said second Y-axis and an outer lateral surface 4' thereof; said second roller 5 has a substantially cylindrical shape and is provided with a second radius R2 extending between said third Z-axis and an outer lateral surface 4' thereof; said linear distance L between said second Y-axis - with said first roller 4 in said first rest configuration - and said third Z-axis - with said second roller 5 in said second rest configuration - is greater than or equal to the sum of the length of said first radius R1 and said second radius R2. Advantageously, said first movement direction A defines with said second movement direction B at least an angle of inclination between 30° and 180°, preferably between 30° and 150°, more preferably between 30° and 90°, and even more preferably between 30° and 60°. Advantageously, the calendering machine 1 comprises second movement means 15 mechanically connected to said striker roller 3 and configured to move said striker roller along a third straight movement direction C - different from said first and said second movement directions A, B - in a plurality of different operating positions.

Advantageously, said striker roller 3, in each said different operating position, defines a corresponding said passage slot 6 - with said first or said second roller 4, 5 in said first or said second operating configuration - in a different angular position about said first X- axis.

Advantageously, the calendering machine 1 comprises a third roller 14 extending along a fourth W-axis, substantially parallel to said first X-axis, configured to rotate about said fourth W-axis and to be moved between a third working configuration in which said third roller 14 is proximal to said striker roller 2 and a third rest configuration in which said third roller 14 is placed distal to said striker roller 2.

The movement means 7 are configured to move said third roller 14 between said third working configuration and said third resting configuration along a fourth straight movement direction D.

Advantageously, said third rest configuration of said third roller 14 is interposed between said first rest configuration of said first roller 4 and said second rest configuration of said second roller 5.

### BRIEF DESCRIPTION OF THE FIGURES

The present invention is hereinafter further clarified in some of its preferred practical embodiments, purely given for illustrative and non-limiting purposes only, with reference to the attached drawings, in which:

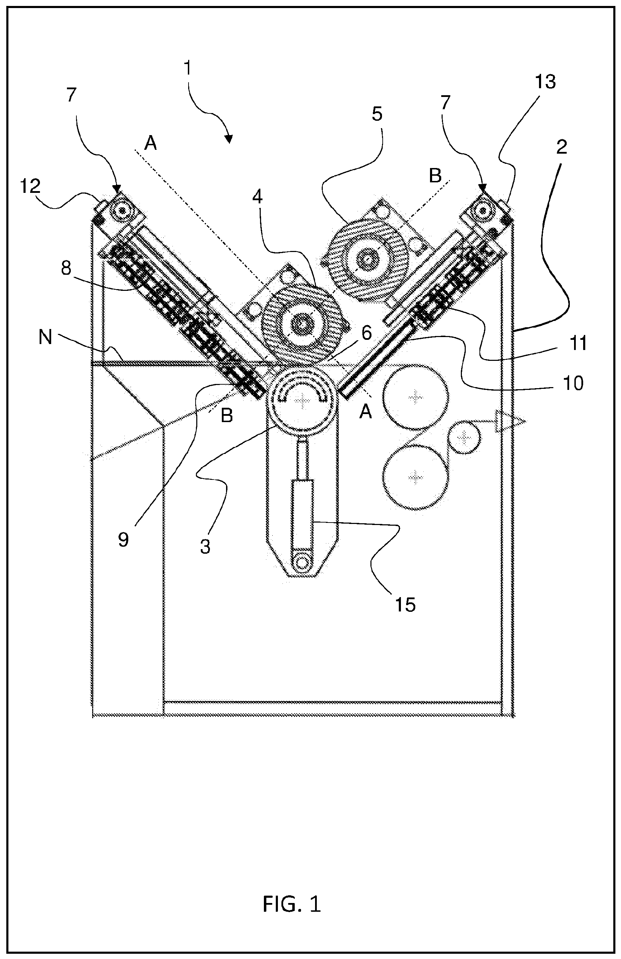

- Figure 1 shows a schematic front view of a first embodiment of a calendering machine according to the present invention;
- Figure 2A shows a schematic side view of the calendering machine in Figure 1;
- Figure 2B shows a schematic side view of a different embodiment of the calendering machine of figure 1;

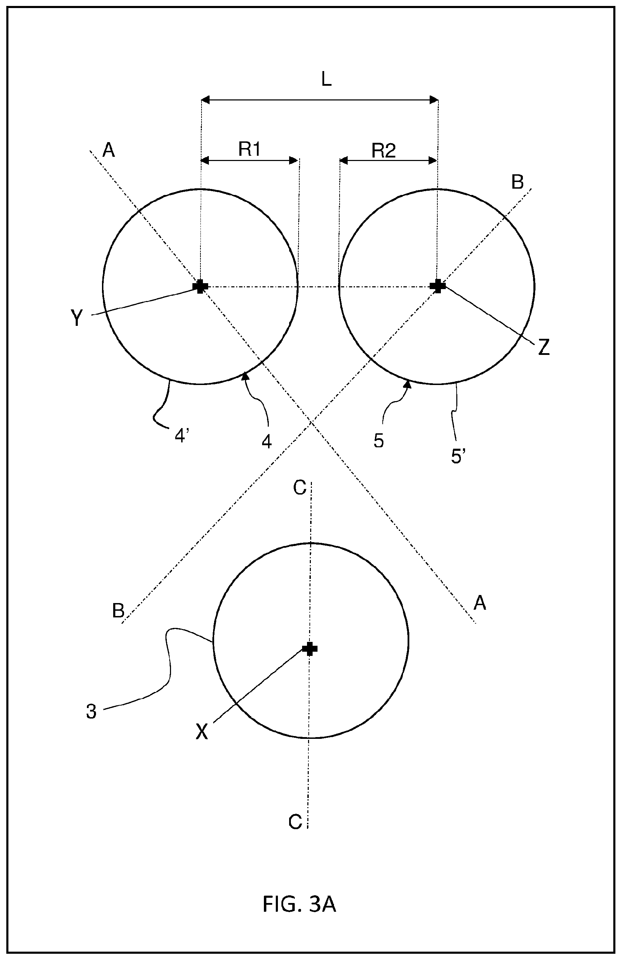

- Figure 3A shows a schematic front view of the calendering machine according to a first preferred embodiment, with some parts removed to better highlight others;

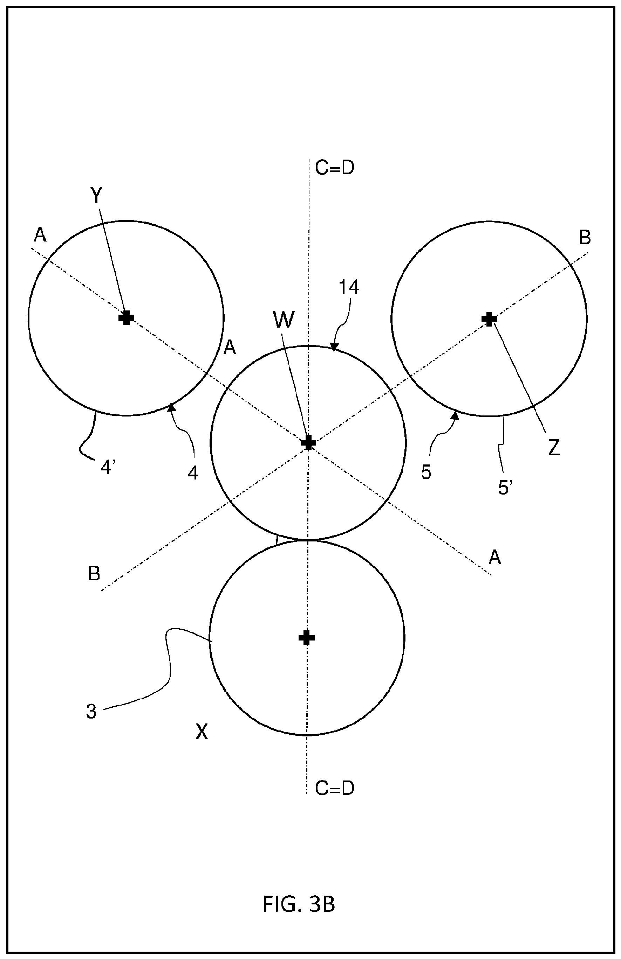

- Figure 3B shows a schematic front view of the calendering machine according to a second preferred embodiment, with some parts removed to better highlight others;
- Figure 4A shows a schematic front view of the machine of the invention with a first roller in a working configuration;
- Figure 4B shows a schematic front view of the machine of the invention with the first roller in a different working configuration;
- Figure 5 shows a schematic front view of a second embodiment of the machine according to the invention.

### DETAILED DESCRIPTION OF THE INVENTION

With reference to the attached drawings, a calendering machine 1, particularly for non- woven fabric, according to the present invention has been shown as a whole.

The machine according to the invention finds advantageous use in the field of woven or non-woven fabric production and forming. Preferably, the machine according to the invention can be used for performing finishing or dressing processing on sliver of filaments of plastic material to thus produce a sliver of non-woven fabric.

Therefore, the term "calendering" shall be understood, within the meaning of the present description, as a surface finishing or heat sealing of fibers comprising the woven or the fabric or nonwoven fabric.

The calendering machine 1 object of the present invention comprises a support structure 2. Preferably, the support structure 2 comprises at least a frame, in particular made of a rigid material, for example a metallic material, such as more particularly steel or the like.

Preferably, said support structure 2 comprises a base 21 having substantially mainly horizontal development, i.e., parallel to the ground.

Preferably, the base 21 of the support structure 2 comprises feet and/or brackets arranged to be placed on the ground, advantageously to allow stable positioning of the machine 1 on the ground surface.

Preferably, said support structure 2 further comprises stanchions 22, known in the technical jargon of the industry as "shoulders," preferably arranged facing each other.

Preferably, the uprights 22 of support structure 2 extend parallel to each other, particularly parallel to a vertical direction.

Conveniently, on the support structure 2, and in particular on the uprights 22, housing seats 23 are formed, configured to house lateral ends of rollers described in detail below. Preferably, said support structure 2 is made of a metallic material, e.g., steel and/or cast iron, in order to give strength and rigidity to the machine 1 during calendering processing.

The calendering machine 1 further comprises at least one striker roller 3. Said striker roller 3 extends along a first X-axis, rotatably arranged on said support structure 2 and configured to rotate about said first X-axis.

Advantageously, the striker roller 3 is substantially cylindrical in shape and is preferably made of metallic material.

The machine 1 comprises bending or crowning means 16 configured to deform its outer cylindrical surface. The crowning means are configured to deform the striker roller from a substantially cylindrical conformation to a crowned or at least partially expanded shape, i.e., having at least one enlarged footprint area.

In other words, said machine preferably comprises bending - or crowning - means 16 configured to deform said striker roller 3 from a substantially cylindrical conformation to a crowned or at least partially expanded shape to compensate for bending due to the action of said first roller 4 and said second roller 5.

Advantageously, the crowning means include at least a hydraulic circuit 17 arranged in fluid communication with an expansion chamber provided within the striker roller 3.

Preferably, the hydraulic circuit includes flexible piping connected at least to the striker roller 3.

Conveniently, the crowning means 16 comprising at least a pump 18, particularly a positive-displacement pump, in fluid communication with the hydraulic circuit 17 and in particular with the flexible piping. The pump 18 is configured to push a pressurized oil flow inside the hydraulic circuit 17 and force the pressure increase inside the expansion chamber formed inside the striker roller 3.

Thus, following the activation of pump 18, the expansion chamber inside striker roller 3 is configured to expand and force deformation of its outer surface.

Advantageously, the machine 1 comprises at least one electronic control unit, electronically connected to the pump 18.

The electronic control unit is configured to control the activation of the pump 18 to deform the striker roller 3, particularly by the operation of a pre-set and/or variable pressure.

The machine is extremely flexible and reliable and can work in a plurality of different configurations.

The flexing means 16 are configured to modify the camber of said striker roller so as to exert an abutment against the bending caused by said first roller, said second roller and - preferably - said third roller.

The calendering machine 1 further comprises a first roller 4 extending along a second Y-axis, substantially parallel to said first X-axis, configured to rotate about said second Y- axis and to be moved between a first working configuration in which said first roller 4 is proximal to said striker roller 3 and a first rest configuration in which said first roller 4 is placed distal to said striker roller 3.

Preferably, said first roller 4 has a substantially cylindrical shape and is provided along its perimeter with at least a corresponding first outer surface 4'. Conveniently, the outer surface 4' also has a substantially cylindrical shape.

The calendering machine 1 further comprises a second roller 5 extending along a third Z-axis, substantially parallel to said first X-axis and said second Y-axis, configured to rotate about a third Z-axis and to be moved between a second working configuration in which said second roller 5 is proximal to said striker roller 3 and a second rest configuration in which said second roller 5 is placed distal to said striker roller 3.

Preferably said second roller 5 has a substantially cylindrical shape and is provided along its perimeter with at least a corresponding first outer surface 5'. Appropriately, the outer surface 5' also has a substantially cylindrical shape.

In accordance with the embodiment form illustrated in the attached figures, the first roller 4 and the second roller 5 are substantially provided with the same dimensions and/or proportions. Otherwise, in accordance with a further embodiment form not shown in the appended figures, the first roller 4 and the second roller 5 may have different dimensions and/or proportions.

Said first roller 4 in said first working configuration and said second roller 5 in said second working configuration define a passage slot 6 for at least a sliver N of woven fabric and/or nonwoven fabric, and wherein with said first roller 4 in said first working configuration, said second roller 5 is in said rest configuration and vice versa.

The calendering machine 1 further comprises movement means 7 mechanically connected to at least said first roller 4 and said second roller 5 and configured to move said first roller 4 and said second roller 5.

In more detail, said movement means 7 are configured to move said first roller 4 between said first working configuration and said first rest configuration along a first rectilinear movement direction A and to move said second roller 5 between said second working configuration and said second rest configuration along a second rectilinear movement direction B different from said first rectilinear movement direction.

Even more particularly, said movement means 7 further comprise at least one first slide 8 extending parallel to said first movement direction A, and at least one first sliding block 9 slidably associated with said first guide 8 and bearing mounted said first roller 4. Advantageously, said movement means 7 further comprise at least a second guide 10 extending parallel to said second movement direction B, and at least one second sliding block 11 slidably associated with said second guide 10 and bearing mounted said second roller 5. Preferably, said first slide 8 and said second slide 10 comprise at least one corresponding first and second rail, e.g., a prismatic or cylindrical bar, mechanically connected to said support structure and configured to mechanically couple with said at least one first sliding block 9 and said at least one second sliding block 11 sliding along said rails.

In accordance with a first embodiment, said at least one first sliding block 9 and said at least one second sliding block 11 realizing with said respective slides 8, 10 a prismatic type of coupling, wherein in particular the only direction of motion allowed by said coupling is along the respective first and second rectilinear directions of movement A, B.

Even more in detail said movement means 7 further comprise at least one first actuator 12 mechanically connected to said first sliding block 9 and operable to move said first sliding block 9 linearly along said first movement direction A.

Preferably, said first actuator 12 comprises at least one first motor and at least one first conversion mechanism mechanically interposed between said first motor and said first sliding block, preferably configured to convert a rotary motion of said motor into rectilinear motion, particularly reciprocating motion, of said first sliding block 9 along said first guide 8.

In this way, the first actuator 12 allows the first roller 4 to be moved along the first guide 8 along the first rectilinear movement direction A.

Preferably, said first motor is an electric motor, such as for example a permanent magnet motor or asynchronous motor, and includes an appropriate first inverter to controlling its operation. Preferably, the first motor is also electronically connected to the electronic control unit. In particular, the first inverter of the first motor is connected to the electronic control unit and is configured to receive command signals in order to control the operational variation of the same first motor.

Preferably, said first conversion mechanism may comprise, for example, a trapezoidal screw, or ball screw, or even a pinion-rack system. Otherwise, said first conversion mechanism may comprise a crankshaft system type, or any other mechanism suitable for converting rotary motion into reciprocating rectilinear motion, per se known to the person skilled in the art and therefore not in detail described below.

Preferably, the machine also comprises at least a first speed reducer, mechanically interposed between the first motor and the first conversion mechanism. For example, the first speed reducer may comprise an epicyclic reduction gear or flexible transmission means such as belts, ropes, chains or the like.

Advantageously, said movement means 7 further comprise at least a second actuator 13 mechanically connected to said second sliding block 11 and operable to move said second sliding block 11 linearly along said second movement direction B.

Preferably, said second actuator 13 comprises at least one second motor and at least one second conversion mechanism mechanically interposed between said second motor and said second sliding block 11, preferably configured to convert a rotary motion of said second motor into rectilinear motion, in particular reciprocating motion, of said second sliding block 11 along said second slide 10.

In this way, the second actuator 13 allows the second roller 5 to be moved along the second guide 10 along the second rectilinear movement direction B.

In this way, the movement of the first and second rollers 4, 5 along respective rectilinear movement directions A, B makes it possible to limit the use of rotating movement parts and, at the same time, to realize a compact and easily constructed machine 1. At the same time, the movement of the first and second rollers 4, 5 along respective directions of rectilinear movements A, B allows to minimize the need for inspections and maintenance works since all mechanical components used are subject to reduced mechanical stresses. Preferably, said second motor is an electric motor, such as a permanent magnet motor or asynchronous motor and comprises a suitable second inverter to control its operation.

Preferably, the second motor is also electronically connected to the electronic control unit. Particularly, the second inverter of the second motor is connected to the electronic control unit and is configured to receive command signals to control the operational variation of the same second motor.

Preferably, said second conversion mechanism can comprise, for example, a trapezoidal screw, or ball screw, or even a pinion-rack system. Otherwise, the second conversion mechanism can comprise a crankshaft type system, or any other suitable mechanism for converting rotary motion into reciprocating rectilinear motion, per se known to the person skilled in the art and therefore not in detail described below.

Preferably, the machine also comprises at least a second speed reducer, mechanically interposed between the second motor and the second conversion mechanism. For example, the second speed reducer can comprise epicyclic reduction a geared planetary gear or flexible transmission means such as belts, ropes, chains or the like.

Advantageously, the electronic control unit is programmed to control the activation of the first actuator 12 and of the second actuator 13 alternately. In more detail, the electronic control unit is programmed to control the activation of the first motor and the second motor alternately, so that with the first sliding block 9 and therefore the first roller 4 in the first working configuration, the second sliding block 11 and therefore the second roller 5 are in the second rest configuration.

Advantageously, as anticipated above, said first roller 4 has a substantially cylindrical shape and is provided with a first radius R1 extending between said second Y-axis and its outer lateral surface 4'. Conveniently, as above, said second roller 5 also has a substantially cylindrical shape and is provided with a second radius R2 extending between said third Z-axis and its external lateral surface 5'.

Advantageously, a linear distance L defined between said second Y-axis - with said first roller 4 in said first rest configuration - and said third Z-axis - with said second roller 5 in said second rest configuration - is greater than or equal to the sum of the length of said first radius R1 and of said second radius R2.

In accordance with the preferred embodiment shown in the attached figures, the first and second rollers 4, 5 are arranged above the striker roller 3 and are movable from above, in which they are in the corresponding rest configuration, downwards, in which they are in the corresponding working configuration.

Said first movement direction A defines with said second movement direction B at least an inclination angle between 30° and 150°, more preferably between 30° and 90° and even more preferably between 30° and 60°. In this way, the machine 1 is compact and extremely space-saving, managing to limit the space required for the movement of the rollers 4, 5.

The calendering machine 1 also comprises second movement means 15 mechanically connected to said striker roller 3 and configured to move said striker roller 3 along a rectilinear third movement direction C - different from said first and second movement direction A, B - in many different operating positions.

In accordance with the preferred embodiment shown in the attached figures, the third rectilinear movement direction C is substantially vertical.

In the same way, the plurality of operating positions of the reference roller 3 is defined along the third rectilinear and vertical movement direction C at different heights with respect to the ground or to the base of the support structure 2.

Preferably, the first and second rectilinear movement directions A, B are mutually symmetrical with respect to the aforementioned movement direction C.

Preferably, said second movement means 15 can be of the fluidic type, e.g., a hydraulic and/or mechatronic cylinder, e.g., a kinematic chain comprising a further electric motor, a further speed reducer and a further mechanism for converting rotary motion into linear motion, e.g., a trapezoidal screw or a recirculating ball screw or a pinion-rack type mechanism, such as the mechanisms previously described for moving said first and second rollers 4, 5.

Preferably, said second movement means 15 are arranged below said abutment roller 3, mechanically connected to the support structure 2 and preferably oriented along a direction orthogonal to that of the ground, i.e., along a vertical direction.

Said striker roller 3, in each said different operating position, defines a corresponding said passage slot 6 - with said first or said second roller 4, 5 in the corresponding first or said second working configuration - in a different angular position around to said first X-axis.

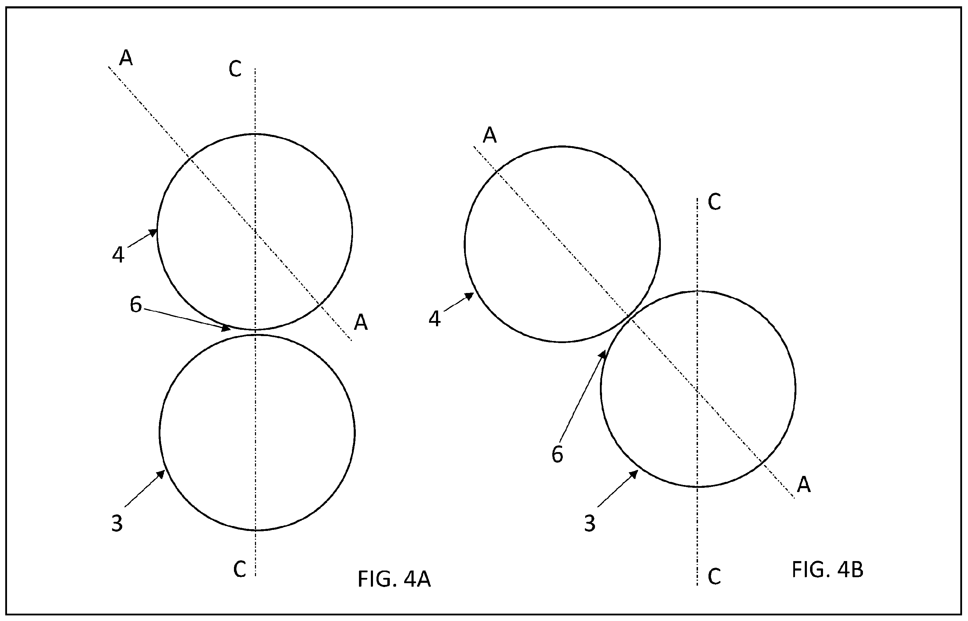

Preferably, with particularly reference to the attached figures 4A and 4B, each operating position of the striker roller 3 corresponds to a different working configuration of the first and second roller 4, 5.

In more detail, with the striker roller at a greater height, the working configuration of the first or second roller 4, 5 defines a passage slot 6 in a different angular position on the outer surface 3' of the striker roller 3, around the first X-axis.

With reference to figure 4A, the working position of the striker roller 3 is such as to allow the first roller 4 to reach a stroke end of the first slide 8 and the passage slot 6 is defined substantially along a horizontal plane.

On the other hand, with reference to figure 4B, the operating position of the striker roller 3 is at a higher height than that of figure 4A and the working configuration of the first roller 4 is defined before reaching the stroke end. In this situation, the passage slot 6 is defined along a plane inclined with respect to a horizontal plane.

In this way, by varying the angular position of the passage slot 6 it is possible to vary the entry angle of the sliver N into the passage slot 6 itself and therefore it is possible to vary a support area of the sliver N on the striker roller 3 during calendering.

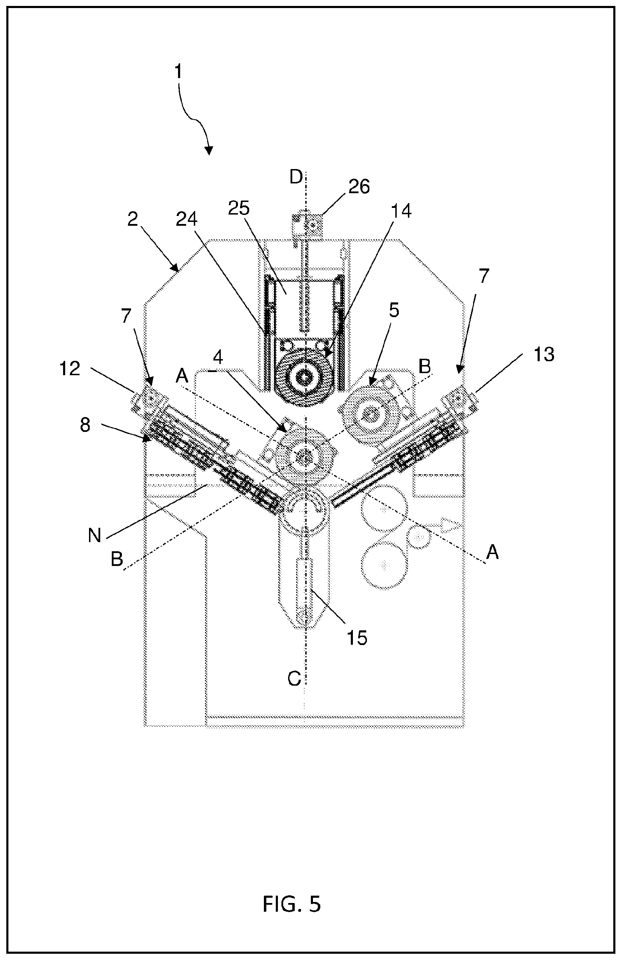

In accordance with a further embodiment of the present invention, shown in particular in the attached figure 5, the calendering machine 1 can comprise more than two rollers and in particular can comprise a third roller 14 extending along a fourth W-axis, substantially parallel to said first X-axis, configured to rotate around said fourth W-axis and to be moved between a third working configuration, in which said third roller 14 is proximal to said striker roller 3 and a third rest configuration in which said third roller 14 is placed distal to said striker roller 3.

Preferably, the movement means 7 are configured to move said third roller 14 between said third working configuration and said third rest configuration along a fourth rectilinear movement direction D.

Advantageously, said third rest configuration of said third roller 14 is interposed between said first rest configuration of said first roller 4 and said second rest configuration of said second roller 5.

Conveniently, the first roller 4, and/or the second roller 5 and/or the third roller 14 is connected to a fluid pressurized oil supply, in a known manner known, by means of piping. The provision of moving the first roller 4, and/or the second roller 5 and/or the third roller 14 along respective rectilinear movement directions, makes the connection to these piping for the pressurized oil very simple, reducing drastically any problems arise in prior art machines.

Advantageously, said movement means 7 also comprise at least one third slide 24 extending parallel to said third movement direction C, and at least one third sliding block slidably associated with said third slide 24 and bearing mounted said third roller 14. Preferably, said third guide 24 comprises at least one corresponding third rail, e.g., a prismatic or cylindrical bar, mechanically connected to said support structure 2 and configured to mechanically couple with said at least third sliding block 25 slidable along said rails.

In accordance with a first embodiment, said third sliding block 25 defines with the respective third slide 24 a prismatic type coupling, in which in particular the only direction of motion allowed by said coupling is that along the respective third rectilinear movement direction C. Even more in detail, said movement means 7 also comprise at least one third actuator 26 mechanically connected to said third sliding block 25 and operable to move said third sliding block 25 linearly along said third movement direction C.

Preferably, said third actuator 26 comprises at least a third motor and at least a third conversion mechanism, mechanically interposed between the third motor and the third sliding block 25, preferably configured to convert a rotary motion of the motor into rectilinear motion, particularly reciprocating, of the third sliding block 25 along the third slide 24.

In this way, the third actuator 26 allows the third roller 14 to be moved along the third slide24 along the third rectilinear movement direction C.

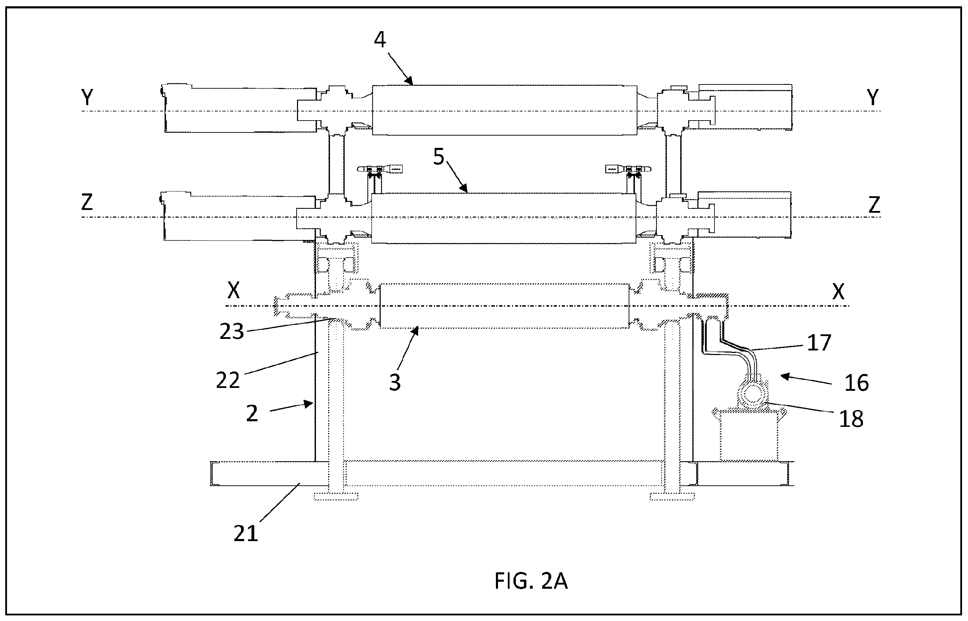

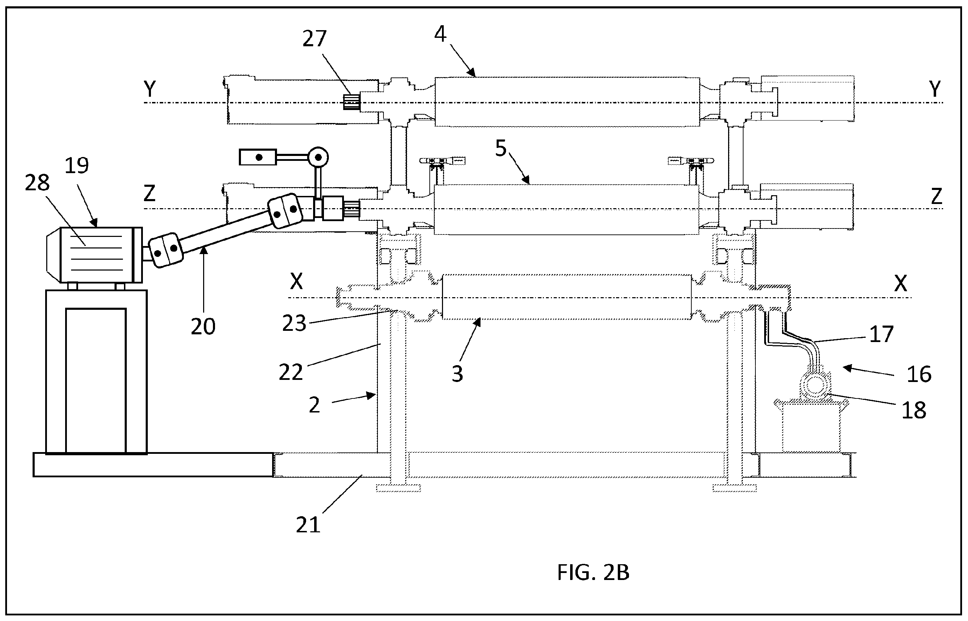

Preferably, in accordance with a particular embodiment shown the attached figure 2B, the movement means 7 comprise drive means 19 configured to be mechanically connected alternatively to the first roller 4 or to the second roller 5 or to the third roller 14. In particular, the drive means 19 are configured to be mechanically connected to the roller 4, 5, 14 in the corresponding working configuration.

In more detail, the movement means 7 comprise at least one joint 20, for example a cardan joint, configured to mechanically connect the drive means 19 with the roller 4, 5, 14 in the corresponding first or second or third working configuration.

Advantageously, in accordance with this particular embodiment, the first actuator 12, the second actuator 13 and the third actuator 26 do not include respective motors but are configured to be mechanically connected to the drive means 19 through the joint 20.

Preferably, in order to mechanically connect the drive means 19 with one of the first, second and third rollers 4, 5, 14, the first actuator 12, the second actuator 13 and/or the third actuator 26 comprise respective shaped ends 27, for example splined shafts, to be connected to the joint 20, preferably in a quick and simple manner.

Advantageously, the shaped ends 27 extend axially along the respective second Y-axis, third Z-axis and/or third W-axis, in particular starting from one end of the respective rollers. Advantageously, the drive means 19 comprise an electric motor 28, for example a synchronous motor, preferably electrically connected to at least one electronic control device, for example a controllable inverter, known to the person skilled in the art and therefore not in detail described in the following.

In this way, the machine according to the invention allows to connect only the roller in the working configuration with the motor means and activate it in rotation. This provision makes it possible to limit the production costs, since only one electric motor and a respective single inverter are suitably provided.

It is described an operating method of a calendering machine 1 which can preferably be implemented with a calendering machine of the type described above and of which the same reference numbers will be kept for simplicity of exposition.

Advantageously, the method comprises a step of exchanging said first roller 4 with said second roller 5, in which said first roller 4 is moved from said first working configuration to said first rest configuration along a first rectilinear movement direction A and said second roller 5 is moved from said second rest configuration to said second working configuration along a second rectilinear movement direction B different from said first rectilinear movement direction A.

Preferably, the exchange phase of the method according to the invention is carried out by activating the movement means 7 and in particular by activating the first actuator 12 and the second actuator 13 alternately.

From what has been described it is clear that the machine for calendering non-woven fabric, according to the invention, is particularly advantageous because:
- is able to obviate, at least in part, the drawbacks of the prior art above mentioned;
- it is functionally completely reliable;
- it is simple and/or inexpensive to manufacture;
- it is economically advantageous;
- it can be made on an industrial level with traditional manufacturing systems and known construction techniques;
- it is an alternative and/or better than traditional solutions;
- presents an alternative and/or improved configuration, both in constructive and in functional terms, with respect to traditional known solutions.

The present invention has been illustrated and described in a preferred embodiment thereof, any other executive embodiments is intended to be applied in practice, without however fall from the scope of protection of the present industrial patent application, as defined in the appended claims.

## Claims

1. Calendering machine (1) comprising:
- a support structure (2);
- at least a striker roller (3) extending along a first axis (X), rotatably mounted on said support structure (2) and configured to rotate around said first axis (X);
- a first roller (4) extending along a second axis (Y), substantially parallel to said first axis (X), configured to rotate around said second axis (Y) and to be moved between a first working configuration, in which said first roller (4) is proximal to said striker roller (3) and a first rest configuration in which said first roller (4) is placed distal to said striker roller (3);
- a second roller (5) extending along a third axis (Z), substantially parallel to said first axis (X) and to said second axis (Y), configured to rotate around the third axis (Z) and to be moved between a second working configuration, in which said second roller (5) is proximal to said striker roller (3) and a second rest configuration in which the second roller (5) is placed distal to said striker roller (3);
wherein said first roller (4) in said first working configuration and said second roller (5) in said second working configuration define a passage slot (6) for at least a sliver (N) of woven fabric and/or non-woven fabric and wherein with said first roller (4) in said first working configuration, said second roller (5) is in said rest configuration;
- movement means (7) mechanically connected at least to said first roller (4) and to said second roller (5) and configured to move said first roller (4) and said second roller (5); said movement means (7) being configured to move said first roller (4) between said first working configuration and said first rest configuration along a first rectilinear movement direction (A) and to move said second roller (5) between said second working configuration and said second rest configuration along a second rectilinear movement direction (B) different from said first rectilinear movement direction;
said first movement direction (A) defining with said second movement direction (B) at least an inclination angle between 30° and 150°;
said calendering machine (1) being **characterized in that** it comprises bending means (16), or crowning means, configured to deform said striker roller (3) from a substantially cylindrical conformation to a crowned or at least partially expanded shape to compensate for bending due to the action of said first roller (4) and said second roller (5);
said calendering machine (1) comprising second movement means (15) mechanically connected to said striker roller (3) and configured to move said striker roller (3) along a third rectilinear movement direction (C) - different with respect to said first and second movement direction (A, B) - in a plurality of different operating positions;
said striker roller (3), in each said different operating position, defining a corresponding said passage slot (6) - with said first or said second roller (4, 5) in said first or second working configuration - in a different angular position around said first axis (X).

2. Calendering machine (1) according to claim 1, **characterized in that** said movement means (7) comprising:
- at least a first slide (8) extending parallel to said first movement direction (A);
- at least a first sliding block (9) slidingly associated with said first slide (8) and bearing mounted said first roller (4);
- at least a second slide (10) extending parallel to said second movement direction (B);
- at least a second sliding (11) slidingly associated with said second slide (10) and bearing mounted said second roller (5).

3. Calendering machine (1) according to claim 2, **characterized in that** said movement means (7) comprising:
- at least a first actuator (12) mechanically connected to said first sliding block (9) and operable to move said first sliding block (9) linearly along said first movement direction (A);
- at least one second actuator (13) mechanically connected to said second slide (11) and operable to move said second slide (11) linearly along said second movement direction (B).

4. Calendering machine (1) according to one or more of the preceding claims, **characterized in that**:
- said first roller (4) has a substantially cylindrical shape and is provided with a first radius (R1) extending between said second axis (Y) and an outer lateral surface (4') thereof;
- said second roller (5) has a substantially cylindrical shape and is provided with a second radius (R2) extending between said third axis (Z) and an outer lateral surface (5') thereof;
a linear distance (L) defined between said second axis (Y) - with said first roller (4) in said first rest configuration - and said third axis (Z) - with said second (5) roller in said second rest configuration - is greater than or equal to the sum of the lengths of said first radius (R1) and of said second radius (R2).

5. Calendering machine (1) according to one or more of the preceding claims, **characterized in that** said first movement direction (A) defines with said second movement direction (B) at least an inclination angle between 30° and 90° and even more preferably between 30° and 60°.

6. Calendering machine (1) according to one or more of the preceding claims, **characterized in that** it comprises a third roller (14) extending along a fourth axis (W), substantially parallel to said first axis (X), configured to rotate around said fourth axis (W) and to be moved between a third working configuration, in which said third roller (14) is proximal to said striker roller (3) and a third rest configuration in which said third roller (14) is placed distal to said striker roller (3); said movement means (7) are configured to move said third roller (14) between said third working configuration and said third rest configuration along a rectilinear fourth movement direction (D).

7. Calendering machine (1) according to claim 6, **characterized in that** said third rest configuration of said third roller (14) is interposed between said first rest configuration of said first roller (4) and said second rest configuration of said second roller (5).

8. Calendering machine (1) according to one or more of the preceding claims, **characterized in that** said crowning means (16) comprise at least a hydraulic circuit (17) arranged in fluid communication with an expansion chamber formed inside the striker roller (3).

9. Calendering machine (1) according to claim 8, **characterized in that** the crowning means (16) comprise at least a pump (18) configured to push a pressurized oil flow inside the hydraulic circuit (17) and force the pressure increase inside the expansion chamber formed inside the striker roller (3).

10. Calendering machine (1) according to claim 9, **characterized in that** the expansion chamber inside the striker roller (3) is configured to expand and force the deformation of its outer surface.

11. Calendering machine (1) according to claim 10, **characterized in that** it comprises at least one electronic control unit, electronically connected to said pump (18) and configured to control the activation of the pump (18) to deform the striker roller (3), particularly by the operation of a pre-set and/or variable pressure.

## Patentansprüche

1. Kalandermaschine (1) umfassend:
- eine tragende Struktur (2);
- - mindestens eine Gegenwalze (3), die entlang einer ersten Achse (X) verläuft, drehbar an der genannten tragenden Struktur (2) angebracht ist und dazu ausgelegt ist, um die genannte erste Achse (X) zu drehen;
- eine erste Walze (4), die entlang einer zweiten Achse (Y), im Wesentlichen parallel zu der genannten ersten Achse (X) verläuft, die dazu ausgelegt ist, um die genannte zweite Achse (Y) zu drehen und zwischen einer ersten Arbeitskonfiguration, in der sich die genannte erste Walze (4) in der Nähe der genannten Gegenwalze (3) befindet, und einer ersten Ruhekonfiguration, in der die genannte erste Walze (4) von der genannten Gegenwalze (3) entfernt positioniert ist, bewegt zu werden;
- eine zweite Walze (5), die entlang einer dritten Achse (Z), im Wesentlichen parallel zu der genannten ersten Achse (X) und zu der genannten zweiten Achse (Y), verläuft, die dazu ausgelegt ist, um die dritte Achse (Z) zu drehen und zwischen einer zweiten Arbeitskonfiguration, in der sich die genannte zweite Walze (5) in der Nähe der genannten Gegenwalze (3) befindet, und einer zweiten Ruhekonfiguration, in der die zweite Walze (5) von der genannten Gegenwalze (3) entfernt positioniert ist, bewegt zu werden;
wobei die genannte erste Walze (4) in der genannten ersten Arbeitskonfiguration und die genannte zweite Walze (5) in der genannten zweiten Arbeitskonfiguration einen Durchgangsschlitz (6) für mindestens ein Band (N) aus Gewebe und/oder Vliesstoff definieren und wobei sich die genannte zweite Walze (5), wenn sich die genannte erste Walze (4) in der genannten ersten Arbeitskonfiguration befindet, in der genannten Ruhekonfiguration befindet;
- Bewegungsmittel (7), die mindestens mit der genannten ersten Walze (4) und der genannten zweiten Walze (5) mechanisch verbunden und dazu ausgelegt sind, die genannte erste Walze (4) und die genannte zweite Walze (5) zu bewegen;
wobei die genannten Bewegungsmittel (7) dazu ausgelegt sind, die genannte erste Walze (4) zwischen der genannten ersten Arbeitskonfiguration und der genannten ersten Ruhekonfiguration entlang einer ersten geradlinigen Bewegungsrichtung (A) zu bewegen und die genannte zweite Walze (5) zwischen der genannten zweiten Arbeitskonfiguration und der genannten zweiten Ruhekonfiguration entlang einer zweiten geradlinigen Bewegungsrichtung (B) zu bewegen, die von der genannten ersten geradlinigen Bewegungsrichtung verschieden ist;
wobei die genannte erste Bewegungsrichtung (A) mit der genannten zweiten Bewegungsrichtung (B) mindestens einen Neigungswinkel zwischen 30° und 150° bildet;
wobei die genannte Kalandermaschine (1) **dadurch gekennzeichnet ist, dass** sie Durchbiegungsmittel (16), oder Bombierungsmittel, umfasst, die dazu ausgelegt sind, die genannte Gegenwalze (3) von einer im Wesentlichen zylindrischen Beschaffenheit in eine ballige oder mindestens teilweise aufgeweitete Form zu verformen, um die durch die Einwirkung der genannten ersten Walze (4) und der genannten zweiten Walze (5) verursachte Durchbiegung auszugleichen;
wobei die genannte Kalandermaschine (1) zweite Bewegungsmittel (15) umfasst, die mechanisch mit der genannten Gegenwalze (3) verbunden und dazu ausgelegt sind, die genannte Gegenwalze (3) entlang einer dritten geradlinigen Bewegungsrichtung (C) - im Verhältnis zu der genannten ersten und der zweiten Bewegungsrichtung (A, B) verschieden - in eine Vielzahl verschiedener Arbeitspositionen zu bewegen;
wobei die genannte Gegenwalze (3), in jeder der genannten verschiedenen Arbeitspositionen, einen entsprechenden genannten Durchgangsschlitz (6) - wenn sich die genannte erste oder genannte zweite Walze (4, 5) in der genannten ersten oder zweiten Arbeitskonfiguration befindet - in einer unterschiedlichen Winkelposition um die genannte erste Achse (X) herum definiert.

2. Kalandermaschine (1) nach Anspruch 1, **dadurch gekennzeichnet, dass** die genannten Bewegungsmittel (7) Folgendes umfassen:
- mindestens eine erste Führungsschiene (8), das parallel zu der genannten ersten Bewegungsrichtung (A) verläuft;
- mindestens einen ersten Gleitblock (9), der verschiebbar mit der genannten ersten Führungsschiene (8) verbunden ist und die genannte erste Walze (4) lagert;
- mindestens eine zweite Führungsschiene (10), das parallel zu der genannten zweiten Bewegungsrichtung (B) verläuft;
- mindestens einen zweiten Gleitblock (11), der verschiebbar mit der genannten zweiten Führungsschiene (10) verbunden ist und die genannte zweite Walze (5) lagert.

3. Kalandermaschine (1) nach Anspruch 2, **dadurch gekennzeichnet, dass** die genannten Bewegungsmittel (7) Folgendes umfassen:
- mindestens einen ersten Aktuator (12), der mechanisch mit dem genannten ersten Gleitblock (9) verbunden ist und betätigt werden kann, um den genannten ersten Gleitblock (9) linear entlang der genannten ersten Bewegungsrichtung (A) zu bewegen;
- mindestens einen zweiten Aktuator (13), der mechanisch mit dem genannten zweiten Gleitblock (11) verbunden ist und betätigt werden kann, um den genannten zweiten Gleitblock (11) linear entlang der genannten zweiten Bewegungsrichtung (B) zu bewegen.

4. Kalandermaschine (1) nach einem oder mehreren der vorangegangenen Ansprüche, **dadurch gekennzeichnet, dass**:
- die genannte erste Walze (4) eine im Wesentlichen zylindrische Form aufweist und mit einem ersten Radius (R1) versehen ist, der zwischen der genannten zweiten Achse (Y) und einer äußeren Seitenfläche (4') derselben verläuft;
- die genannte zweite Walze (5) eine im Wesentlichen zylindrische Form aufweist und mit einem zweiten Radius (R2) versehen ist, der zwischen der genannten dritten Achse (Z) und einer äußeren Seitenfläche (5') derselben verläuft;
ein linearer Abstand (L), der zwischen der genannten zweiten Achse (Y) - wenn sich die genannte erste Walze (4) in der genannten ersten Ruhekonfiguration befindet - und der genannten dritten Achse (Z) - wenn sich die genannte zweite (5) Walze in der genannten zweiten Ruhekonfiguration befindet - definiert ist, größer oder gleich der Summe der Längen des genannten ersten Radius (R1) und des genannten zweiten Radius (R2) ist.

5. Kalandermaschine (1) nach einem oder mehreren der vorangegangenen Ansprüche, **dadurch gekennzeichnet, dass** die genannte erste Bewegungsrichtung (A) mit der genannten zweiten Bewegungsrichtung (B) mindestens einen Neigungswinkel zwischen 30° und 90° und noch bevorzugter zwischen 30° und 60° definiert.

6. Kalandermaschine (1) nach einem oder mehreren der vorangegangenen Ansprüche, **dadurch gekennzeichnet, dass** sie eine dritte Walze (14) umfasst, die entlang einer vierten Achse (W), im Wesentlichen parallel zu der genannten ersten Achse (X), verläuft, die dazu ausgelegt ist, um die genannte vierte Achse (W) zu drehen und zwischen einer dritten Arbeitskonfiguration, in der sich die genannte dritte Walze (14) in der Nähe der genannten Gegenwalze (3) befindet, und einer dritten Ruhekonfiguration, in der die genannte dritte Walze (14) distanziert von der genannten Gegenwalze (3) angeordnet ist, bewegt zu werden;
wobei die genannten Bewegungsmittel (7) dazu ausgelegt sind, die genannte dritte Walze (14) entlang einer geradlinigen vierten Bewegungsrichtung (D) zwischen der genannten dritten Arbeitsstellung und der genannten dritten Ruhekonfiguration zu bewegen.

7. Kalandermaschine (1) nach Anspruch 6, **dadurch gekennzeichnet, dass** die genannte dritte Ruhekonfiguration der genannten dritten Walze (14) zwischen der genannten ersten Ruhekonfiguration der genannten ersten Walze (4) und der genannten zweiten Ruhekonfiguration der genannten zweiten Walze (5) eingefügt ist.

8. Kalandermaschine (1) nach einem oder mehreren der vorangegangenen Ansprüche, **dadurch gekennzeichnet, dass** die genannten Bombierungsmittel (16) mindestens einen Hydraulikkreis (17) umfassen, der in Fluidverbindung mit einer im Inneren der Gegenwalze (3) ausgebildeten Expansionskammer angeordnet ist.

9. Kalandermaschine (1) nach Anspruch 8, **dadurch gekennzeichnet, dass** die Bombierungsmittel (16) mindestens eine Pumpe (18) umfassen, die dazu ausgelegt ist, einen druckbeaufschlagten Ölfluss in den Hydraulikkreislauf (17) zu fördern und den Druckanstieg im Inneren der in der Gegenwalze (3) ausgebildeten Expansionskammer zu bewirken.

10. Kalandermaschine (1) nach Anspruch 9, **dadurch gekennzeichnet, dass** die Expansionskammer im Inneren der Gegenwalze (3) dazu ausgelegt ist, sich auszudehnen und die Verformung ihrer Außenfläche zu bewirken.

11. Kalandermaschine (1) nach Anspruch 10, **dadurch gekennzeichnet, dass** sie mindestens eine elektronische Steuereinheit umfasst, die elektronisch mit der genannten Pumpe (18) verbunden und dazu ausgelegt ist, die Aktivierung der Pumpe (18) zu steuern, um die Gegenwalze (3) zu verformen, insbesondere durch das Einwirken eines voreingestellten und/oder variablen Drucks.

## Revendications

1. Machine de calandrage (1) comprenant :
- une structure de support (2) ;
- - au moins un rouleau de butée (3) s'étendant le long d'un premier axe (X), monté de manière rotative sur ladite structure de support (2) et configuré pour tourner autour dudit premier axe (X) ;
- un premier rouleau (4) s'étendant le long d'un deuxième axe (Y), sensiblement parallèle audit premier axe (X), configuré pour tourner autour dudit deuxième axe (Y) et pour être déplacé entre une première configuration de travail, dans laquelle ledit premier rouleau (4) est proximal audit rouleau de butée (3), et une première configuration de repos, dans laquelle ledit premier rouleau (4) est placé distalement par rapport audit rouleau de butée (3) ;
- un deuxième rouleau (5) s'étendant le long d'un troisième axe (Z), sensiblement parallèle audit premier axe (X) et audit deuxième axe (Y), configuré pour tourner autour du troisième axe (Z) et pour être déplacé entre une deuxième configuration de travail, dans laquelle ledit deuxième rouleau (5) est proximal audit rouleau de butée (3), et une deuxième configuration de repos, dans laquelle le deuxième rouleau (5) est placé distalement par rapport audit rouleau de butée (3) ;
dans laquelle ledit premier rouleau (4), dans ladite première configuration de travail, et ledit deuxième rouleau (5), dans ladite deuxième configuration de travail, définissent une fente de passage (6) pour au moins un ruban (N) de tissu tissé et/ou tissu non tissé, et dans laquelle, lorsque ledit premier rouleau (4) se trouve dans ladite première configuration de travail, ledit deuxième rouleau (5) se trouve dans ladite configuration de repos ;
- des moyens de mouvement (7) reliés mécaniquement au moins audit premier rouleau (4) et audit deuxième rouleau (5) et configurés pour déplacer ledit premier rouleau (4) et ledit deuxième rouleau (5) ;
lesdits moyens de mouvement (7) étant configurés pour déplacer ledit premier rouleau (4) entre ladite première configuration de travail et ladite première configuration de repos le long d'une première direction de mouvement rectiligne (A) et pour déplacer ledit deuxième rouleau (5) entre ladite deuxième configuration de travail et ladite deuxième configuration de repos le long d'une deuxième direction de mouvement rectiligne (B) différente de ladite première direction de mouvement rectiligne ;
ladite première direction de mouvement (A) définissant avec ladite deuxième direction de mouvement (B) au moins un angle d'inclinaison compris entre 30° et 150° ;
ladite machine de calandrage (1) étant **caractérisée en ce qu'**elle comprend des moyens de cintrage (16), ou des moyens de bombage, configurés pour déformer ledit rouleau de butée (3) d'une conformation sensiblement cylindrique à une forme bombée ou au moins partiellement expansée afin de compenser le cintrage dû à l'action dudit premier rouleau (4) et dudit deuxième rouleau (5) ;
ladite machine de calandrage (1) comprenant des deuxièmes moyens de mouvement (15) reliés mécaniquement audit rouleau de butée (3) et configurés pour déplacer ledit rouleau de butée (3) le long d'une troisième direction de mouvement rectiligne (C) - différente par rapport auxdites première et deuxième directions de mouvement (A, B) - dans une pluralité de positions de fonctionnement différentes ;
ledit rouleau de butée (3), dans chaque différente position de fonctionnement, définissant ladite fente de passage (6) correspondante - avec ledit premier ou ledit deuxième rouleau (4, 5) dans lesdites première ou deuxième configurations de travail - dans une position angulaire différente autour dudit premier axe (X).

2. Machine de calandrage (1) selon la revendication 1, **caractérisée en ce que** lesdits moyens de mouvement (7) comprennent :
- au moins un premier coulisseau (8) s'étendant parallèlement à ladite première direction de mouvement (A) ;
- au moins un premier bloc coulissant (9) associé de manière coulissante audit premier coulisseau (8) et portant ledit premier rouleau (4) monté ;
- au moins un deuxième coulisseau (10) s'étendant parallèlement à ladite deuxième direction de mouvement (B) ;
- au moins un deuxième bloc coulissant (11) associé de manière coulissante audit deuxième coulisseau (10) et portant ledit deuxième rouleau (5) monté.

3. Machine de calandrage (1) selon la revendication 2, **caractérisée en ce que** lesdits moyens de mouvement (7) comprennent :
- au moins un premier actionneur (12) relié mécaniquement audit premier bloc coulissant (9) et pouvant être actionné pour déplacer ledit premier bloc coulissant (9) de manière linéaire le long de ladite première direction de mouvement (A) ;
- au moins un deuxième actionneur (13) relié mécaniquement audit deuxième bloc coulissant (11) et pouvant être actionné pour déplacer ledit deuxième bloc coulissant (11) de manière linéaire le long de ladite deuxième direction de mouvement (B).

4. Machine de calandrage (1) selon l'une ou plusieurs des revendications précédentes, **caractérisée en ce que** :
- ledit premier rouleau (4) présente une forme sensiblement cylindrique et est pourvu d'un premier rayon (R1) s'étendant entre ledit deuxième axe (Y) et une surface latérale extérieure (4') de celui-ci ;
- ledit deuxième rouleau (5) présente une forme sensiblement cylindrique et est pourvu d'un deuxième rayon (R2) s'étendant entre ledit troisième axe (Z) et une surface latérale extérieure (5') de celui-ci ;
une distance linéaire (L) définie entre ledit deuxième axe (Y) - lorsque ledit premier rouleau (4) se trouve dans ladite première configuration de repos - et ledit troisième axe (Z) - lorsque ledit deuxième rouleau (5) se trouve dans ladite deuxième configuration de repos - est supérieure ou égale à la somme des longueurs dudit premier rayon (R1) et dudit deuxième rayon (R2).

5. Machine de calandrage (1) selon l'une ou plusieurs des revendications précédentes, **caractérisée en ce que** ladite première direction de mouvement (A) définit avec ladite deuxième direction de mouvement (B) au moins un angle d'inclinaison compris entre 30° et 90°, et encore plus préférablement entre 30° et 60°.

6. Machine de calandrage (1) selon l'une ou plusieurs des revendications précédentes, **caractérisée en ce qu'**elle comprend un troisième rouleau (14) s'étendant le long d'un quatrième axe (W), sensiblement parallèle audit premier axe (X), configuré pour tourner autour dudit quatrième axe (W) et pour être déplacé entre une troisième configuration de travail, dans laquelle ledit troisième rouleau (14) est proximal audit rouleau de butée (3), et une troisième configuration de repos, dans laquelle ledit troisième rouleau (14) est placé distalement par rapport audit rouleau de butée (3) ;
lesdits moyens de mouvement (7) sont configurés pour déplacer ledit troisième rouleau (14) entre ladite troisième configuration de travail et ladite troisième configuration de repos le long d'une quatrième direction de mouvement rectiligne (D).

7. Machine de calandrage (1) selon la revendication 6, **caractérisée en ce que** ladite troisième configuration de repos dudit troisième rouleau (14) est intercalée entre ladite première configuration de repos dudit premier rouleau (4) et ladite deuxième configuration de repos dudit deuxième rouleau (5).

8. Machine de calandrage (1) selon l'une ou plusieurs des revendications précédentes, **caractérisée en ce que** lesdits moyens de bombage (16) comprennent au moins un circuit hydraulique (17) agencé en communication fluidique avec une chambre d'expansion formée à l'intérieur du rouleau de butée (3).

9. Machine de calandrage (1) selon la revendication 8, **caractérisée en ce que** les moyens de bombage (16) comprennent au moins une pompe (18) configurée pour propulser un flux d'huile sous pression à l'intérieur du circuit hydraulique (17) et forcer l'augmentation de la pression à l'intérieur de la chambre d'expansion formée à l'intérieur du rouleau de butée (3).

10. Machine de calandrage (1) selon la revendication 9, **caractérisée en ce que** la chambre d'expansion située à l'intérieur du rouleau de butée (3) est configurée pour se dilater et forcer la déformation de sa surface extérieure.

11. Machine de calandrage (1) selon la revendication 10, **caractérisée en ce qu'**elle comprend au moins une unité de commande électronique, reliée électroniquement à ladite pompe (18) et configurée pour commander l'activation de la pompe (18) afin de déformer le rouleau de butée (3), notamment par l'exploitation d'une pression prédéfinie et/ou variable.
